# EUROPEAN PATENT SPECIFICATION

(11) **EP 0 339 758 B1**
(45) Date of publication and mention of the grant of the patent: **13.09.1995**
(21) Application number: 89301145.2
(22) Date of filing: 06.02.1989
(51) Int. Cl.: G06F 17/00

(54) **Image processing apparatus for performing projective transformations**
Bildverarbeitungsgerät zur Ausführung von projektiven Transformationen
Appareil de traitement d'image pour effectuer des transformations de projection

(30) Priority: 15.03.1988 JP 59569/88
(43) Date of publication of application: 02.11.1989
(73) Proprietor: International Business Machines Corporation, Armonk, N.Y. 10504 (US)
(72) Inventor: Miyazawa, Atushi, Kawasaki-shi Kanagawa-ken (JP)
(74) Representative: Burt, Roger James, Dr.

(56) References cited:
- EP-A- 0 194 066

## Description

The present invention relates to image processing apparatus.

Geometric transformation processing of image information is one of the basic technologies in the field of image processing. As with image expansion/reduction and rotation, projective transformation is an important geometric transformation facility for a two-dimensional image because it has the feature of mapping the source image information defined in a rectangular area on the plane to any quadrangular area on the same plane while maintaining the linearity of the image. This allows, for example, for the providing of unconstrained transformation of image data in an animation system or the like, application of so-called texture mapping processing, in which the image is pasted in a plane given in a three-dimensional space, and removal of distortion occurring when an image is entered, which cannot be completely eliminated by expansion/reduction or rotation.

Projective transformation in a plane is determined by four sets of corresponding points. The correspondence between the coordinates of pixels of the source image (x, y), and the coordinates of pixel after the transformation (x′, y′) is mathematically defined by the following equation using homogeneous coordinates. 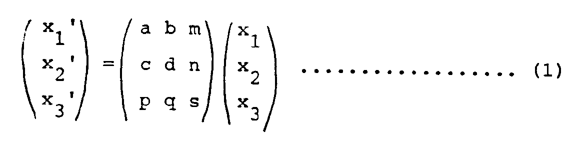
wherein,
x₁ = x, x₂ = y, x₃ = 1,
x′ = x₁′/x₃′, y′ = x₂′/x₃′

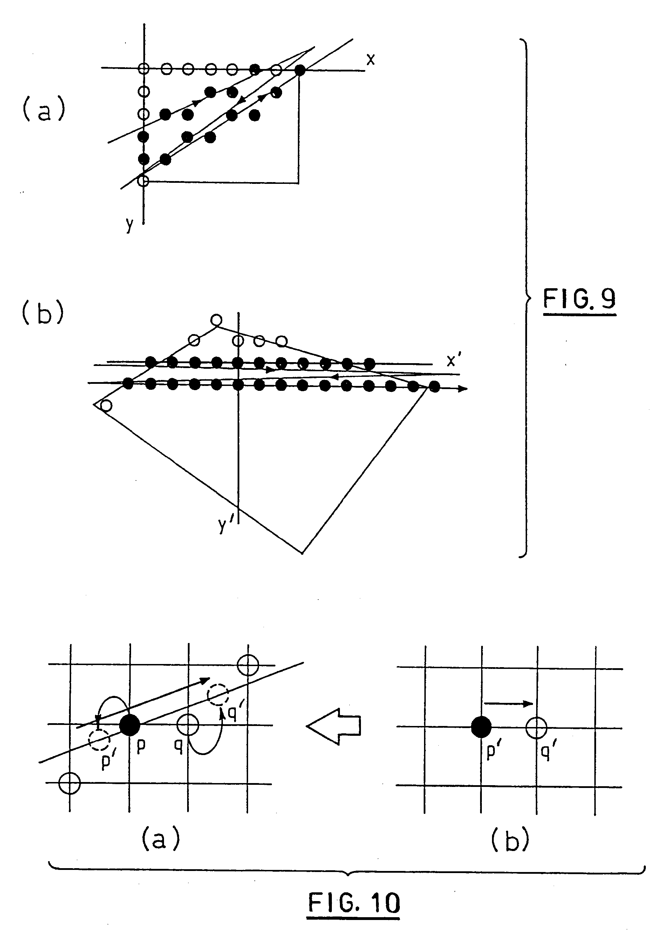

Figure 9 (a) shows the source image information defined on a rectangular lattice, while Figure 9 (b) shows the same image information after transformation (target image). To perform projective transformation for mapping the target image to the source image, the reverse operation to that given by equation (1) is performed, that is, after the mapping from the target image to the source image$\text{x = (A₁x′ + B₁y′ + C₁)/(D₁x′ + E₁y′ + F₁)} \text{y = (A₂x′ + B₂y′ + C₂)/(D₁x′ + E₁y′ + F₁)}$
wherein,
A₁ = ds - nq, B₁ = mq - bs, C₁ = bn - dm,
A₂ = np - cs, B₂ = as - mp, C₂ = cm - an,
D₁ = cq - dp, E₁ = bp - aq, F₁ = ad - bc
and corresponding positions on the source image (p′, q′ in Figure 10 (a)) are found for each pixel of the target image (p′, q′ in Figure 10 (b)) while raster scanning over a rectangular area circumscribing the target image. The source image points nearest to the calculated positions are taken to give the values of the pixels (p, q in Figure 10 (a)) in the output target image. The reason why mapping, reverse to that defined by equation (1), is used is that the mapping from the source image under equation (1) to the target image may cause gaps in the target image. In such a case, some processing becomes necessary, which is cumbersome.

However, the calculations required by equation (2) involve eight multiplications, eight additions and subtractions, and two divisions.

This means that an enormous amount of calculation is required for the transformation processing.

The conventional projective transformation is described in detail in "Computer Image Processing and Recognition" by Ernest L Hall, Academic Press, pp 86-88.

EP-A-0,194,066 describes a method and apparatus for mapping video sample values from a first sample domain to a second sample domain using a mapping function. The mapping function involves a change in image size.

Accordingly, the present invention provides, in an image processing apparatus for performing projective transformation from a source image on a target image along a plurality of consecutive lines parallel to one of the coordinate axes of the source image or the target image, the image processing apparatus comprising; mapping means that determines a mapping between the coordinates of the pixels of the source image and coordinates of the pixels of the target image, and means that determines the values of the pixels of the target image based on the mapping and the values of pixels of the source image, characterized by a hyperbola generator that sequentially examines rectangular lattice points near desired hyperbola sequentially along the hyperbola, and outputs a chain of the determined lattice points as an approximate curve of the hyperbola, wherein said mapping means determines a mapping between the coordinates of the pixels of the source image and coordinates of the pixels of the target image based on the output of the hyperbola generator.

In such an arrangement, the hyperbola can be incrementally generated by using a recurrence formula to easily perform the projective transformation.

The embodiment of the invention disclosed hereinafter is an image processing device capable of performing so-called image projective transformation processing in which uncoded source image information defined in a rectangular area on a plane is projected onto a quadrangular area delimited by any four points on the same plane, and can perform the projective transformation with a smaller amount of calculation than is required by known prior methods by employing a hyperbola generator.

Such a device can operate with a digital display such as a CRT - cathode ray tube -, a digital plotter, or a matrix printer.

This arrangement uses the fact that the projective transformation is usually performed along a plurality of continuous lines parallel to one coordinate axis of the source image or target image. As described in the prior art, in the most typical example, projective transformation is performed along the scanning line of the target image. The value of y′ in the equation (2) becomes a constant for the transformation of pixels on one scanning line. Both the x and y coordinates for pixels of the source image are expressed as linear fractional functions of x′. Because the linear fractional functions corresponds to an equilateral hyperbola, the mapping of the equation (2) results in generation of a hyperbola.

The same is true when the projective transformation is performed along the subscanning direction of the target image, or when it is performed along the main scanning direction or the subscanning direction of the source image.

The present invention will be described further by way of example with reference to an embodiment thereof, together with examples of the prior art, as illustrated in the accompanying drawings, in which:
Figure 1 is a block diagram illustrating the functions of the projective transformation executed;
Figure 2 is a block diagram illustrating a personal computer system that is used;
Figure 3 is a graph illustrating the mapping from a target image to a source image;
Figure 4 is a diagram illustrating a stored state of the image information;
Figure 5 is a diagram illustrating the relation between the image information and the storage address;
Figures 6 and 7 are graphs illustrating the hyperbola generator 13;
Figure 8 is a similar flowchart; and
Figures 9 and 10 are graphs illustrating examples of the prior art.

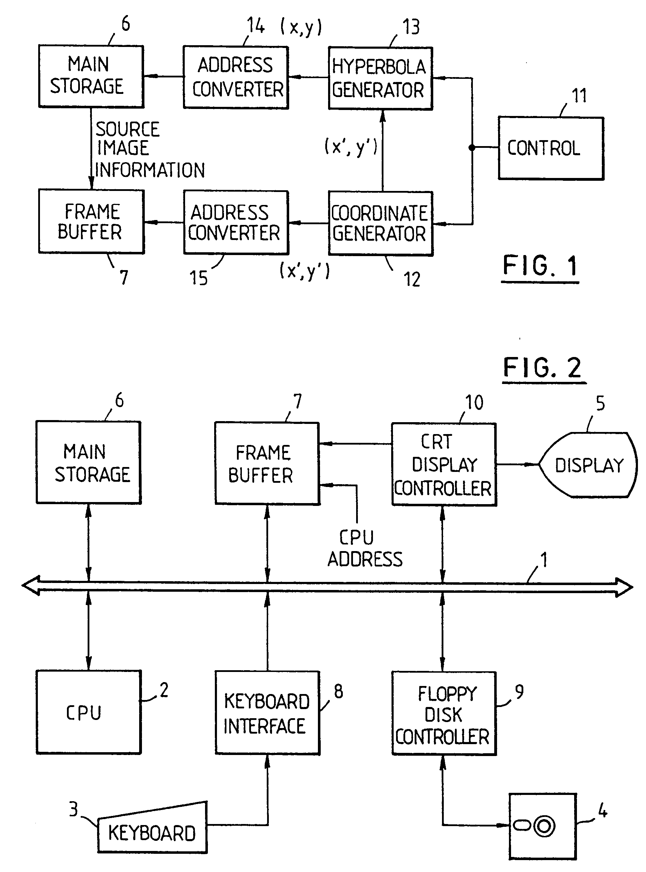

Figure 2 illustrates an overview of a personal computer system that is used in the embodiment. The system may be the IBM Personal System/55 of IBM Japan Limited. A data bus 1 is connected to a CPU 2, a keyboard 3, a floppy disk drive 4, a CRT display 5, main storage 6, a frame buffer 7 and the like. As interfaces, a keyboard interface 8, a floppy disk controller 9 and a CRT display controller 10 are provided between the keyboard 3, the floppy disk drive 4 and the CRT display 5, and the data bus 1, respectively. It is pointed out that components such as the address bus, control bus and ROS are not illustrated.

The CRT display 5 is a 15-inch monochrome display that can display 1024 x 768 pixels each of a diameter of about 0.22 mm. The frame buffer 7 has a capacity that can support the all points addressable graphic mode of 1024 x 768 pixels. The frame buffer 7 is addressable by the CPU 2 and the CRT display controller 10. It allows graphic data to be written into the frame buffer 7 according to CPU addresses, or the contents of the frame buffer 7 to be read. The CRT display controller 10 accesses the frame buffer 7 to display its contents on the CRT display 5, in response to a vertical synchronising signal and a horizontal synchronising signal for the CRT display 5.

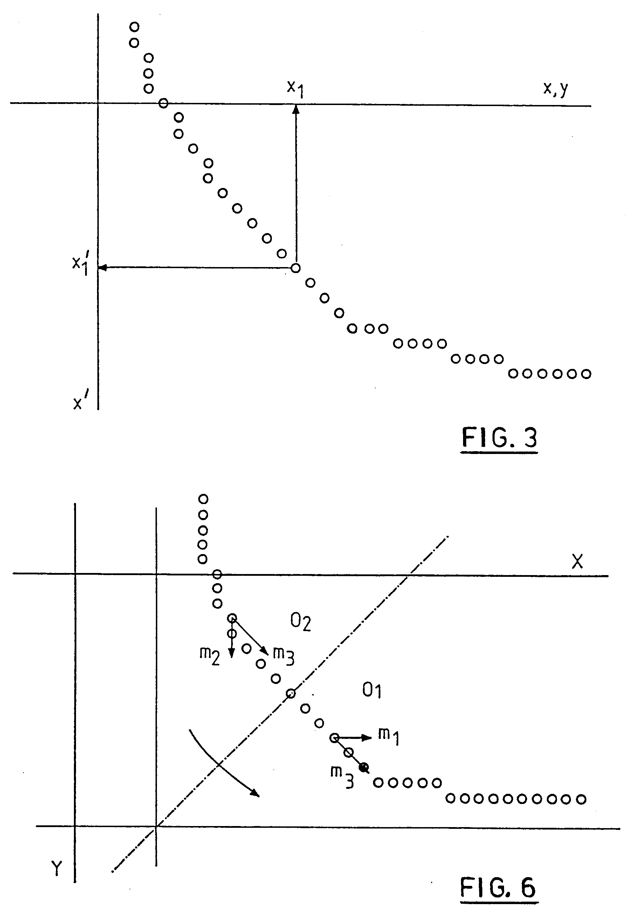

Figure 1 shows the projective transformation functions executed by the system of Figure 2 in blocks. In Figure 1, a coordinate generator 12 generates data x′ and y′ relating to the coordinates of the target image under control of the control block 11. The coordinates (x′, y′) are sequentially determined so as to be along the scanning line of the target image. That is, an operation in which y′ is set, and then x′ is varied while keeping the y′ constant, is repeatedly performed. The coordinate data x′, y′ from the coordinate generator 12 is supplied to a hyperbola generator 13. In a range where y′ is constant as described above, both the x and y coordinates of the source image are expressed as linear fractional functions of x′, and correlated to x′ by the hyperbola as shown in Figure 3. For example, a predetermined coordinate value x₁ of the source image is correlated to a coordinate value x₁′ of the target image as indicated by an arrow. The hyperbola generator 13 determines, under control of the control block 11 parameters for the hyperbola based on y′ and information on four sets of corresponding points specifying the projective transformation, and then outputs data of the hyperbola corresponding to x and y. The output data x, y from the hyperbola generator 13 is supplied to an address converter 14, based on which the source image information in the main storage is accessed. The source image information is stored in the main storage 1, and accessed by:$\text{(Effective address 1) = (Base address 1) + y.(Raster length 1) + x.}$

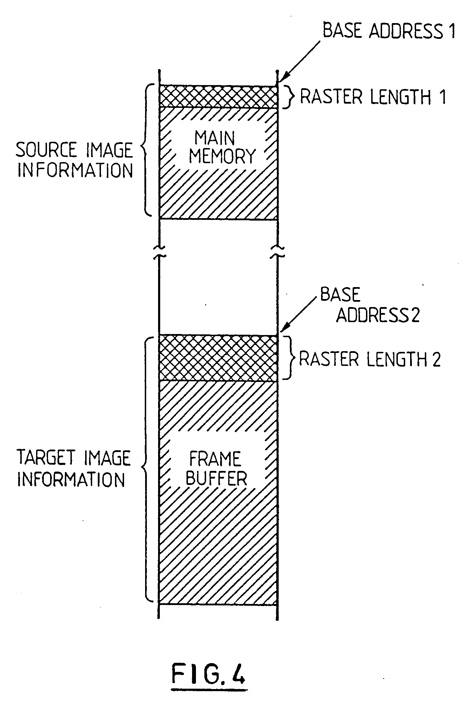

On the other hand, the coordinate data (x′, y′) from the coordinate generator 12 is supplied to another address converter 15. This is for addressing the target image information region (Figure 4) in the frame buffer 7, and arranged to write the accessed source image information in an address of:$\text{(Effective address 2) = (Base address 2) + y′.(Raster length 2) + x′.}$

This causes the image after projective transformation, that is, the target image, to be stored in the frame buffer 7, and then to be displayed on the CRT display 5.

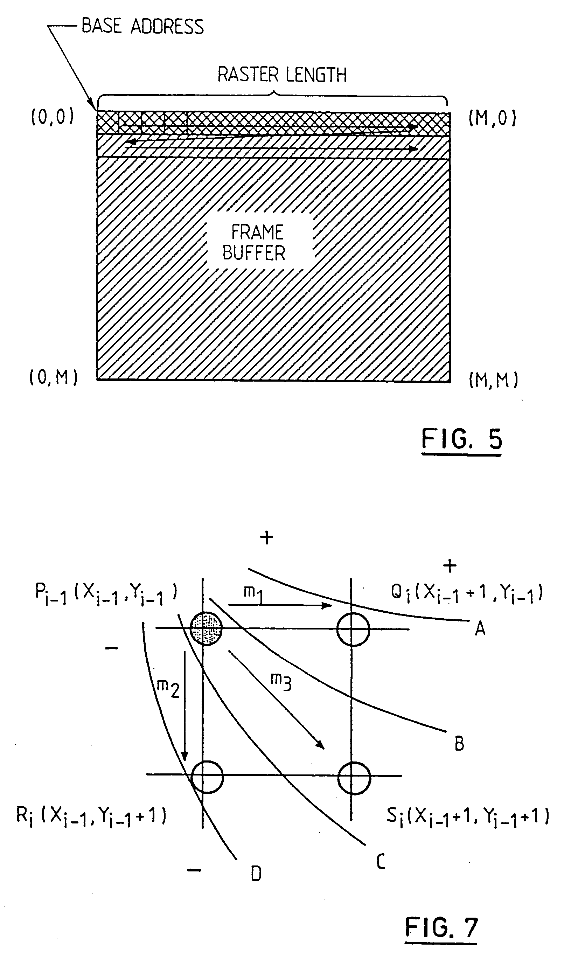

It is assumed that the source image information and the target image information are stored in the main storage 6 and the frame buffer 7, respectively, as indicated by the arrows in Figure 5.

The hyperbola generator 13 of Figure 1 is now described in detail.

The mapping from the target image to the source image results in generation of a hyperbola as follows:

Starting from equation (2),$\text{x = (A₁x′ + B₁y′ + C₁)/(D₁x′ + E₁y′ + F₁)} \text{y = (A₂x′ + B₂y′ + C₂)/(D₁x′ + E₁y′ + F₁)}$
for a range where the scanning line number of the target image, or y′, is constant, these equations can be rewritten as follows by appropriately shifting the origin:$\text{f₁ (x, x′) = xx′ - k₁ = 0} \text{f₂ (y, x′) = yx′ - k₂ = 0}$

In addition, they can be expressed in a general form as follows:$\text{f (X, Y) = XY - K = 0}$

Thus, the mapping of the equation (2) finally results in the generation of a hyperbola shown in Figure 6.

At each processing stage, the hyperbola generator 13 selects a set of points Pᵢ (Xᵢ, Yᵢ ), i = 1, 2, ... on the rectangular lattice that is closest to a true hyperbola, and therefore renders minimum the absolute value of the error term F (Pᵢ ) = f (Xᵢ, Yᵢ ) = XᵢYᵢ - K, that is the equation (4) substituted for the coordinate value of the point. If it is assumed in Figure 6 that the equilateral hyperbola to be generated is in the range of the octant O₁, it is seen that the orientation of the range of points selected by the hyperbola generator is limited only either to the right (m₁) or to the lower right (m₃). The case of the octant O₂ will be described later.

Figure 7 shows possible cases (A to D) in which an equilateral hyperbola with a positive gradient passes through or around a unit cell. It is assumed that the point Pᵢ₋₁ is selected to be closest to the hyperbola for X = Xᵢ₋₁. The hyperbola generator must determine whether the point Qᵢ or Sᵢ is the closer to the hyperbola, for the next processing step of X = Xᵢ₋₁ + 1. Thus, the following equation is defined:${\text{F(Q}}_{\text{i}} {\text{) = (X}}_{\text{i-1}} {\text{+ 1) Y}}_{\text{i-1}} \text{- K} {\text{F(S}}_{\text{i}} {\text{) = (X}}_{\text{i-1}} {\text{+ 1) (Y}}_{\text{i-1}} \text{+1) - K}$

If [F(Qᵢ)] ≧ [F(Sᵢ)], the point Sᵢ is closer to or equidistant from the true hyperbola as compared with the point Qᵢ. If [F(Qᵢ)] < [F(Sᵢ )], Qᵢ is closer to the hyperbola than Sᵢ. Therefore, it is sufficient to select the point Qᵢ by the sign of a control variable dᵢ that is defined as dᵢ = [F(Qᵢ)] - [F(Sᵢ)]. That is, it is sufficient to select the point Sᵢ for dᵢ ≧ 0 and the point Qᵢ for dᵢ < 0.

In a case where the hyperbola passes through the unit cell as indicated by B, F(Qᵢ) > 0 and F(Sᵢ) < 0, and the control variable can be then expressed as:${\text{d}}_{\text{i}} {\text{= F(Q}}_{\text{i}} {\text{) + F(S}}_{\text{i}} \text{)}$

Here, a corresponding value of dᵢ is examined from the equation (6) for a case where the hyperbola by-passes the unit cell as with A.
Obviously, F(Qᵢ ) < 0 and F(Sᵢ ) < 0, and therefore, it is seen that the selection of the point Qᵢ can be derived by applying the same selection rule as for case B. For a case where the hyperbola passes through the unit cell as with C, dᵢ > 0 because F(Qᵢ ) > 0 and F(Sᵢ) > 0, and the point Sᵢ is selected by the same rule.

Although the calculation of dᵢ according to the equation (6) involves several multiplications, when the equation (5) is substituted, it can be arranged into an equivalent recurrence formula consisting of only additions and subtractions, and shifting operations,${\text{d}}_{\text{o}} {\text{= 2((X}}_{\text{o}} {\text{+ 1)Y}}_{\text{o}} {\text{- K) + (X}}_{\text{o}} \text{+ 1),}$
when the point Qᵢ is selected (dᵢ < 0),${\text{d}}_{\text{i+1}} {\text{= d}}_{\text{i}} {\text{+ 2Y}}_{\text{i-1}} \text{+ 1}$
and, when the point Sᵢ is selected (dᵢ > 0),${\text{d}}_{\text{i+1}} {\text{= d}}_{\text{i}} {\text{+ 2(Y}}_{\text{i-1}} {\text{+ X}}_{\text{i-1}} \text{) + 7.}$

An equilateral hyperbola in the range of octant O₂ can be computed in the same manner as for the octant O₁, except that the orientation of the range of points selected by the hyperbola generator is only either to the lower right (m₃) or to the bottom (m₂). The hyperbola generator determines which point, Rᵢ or Sᵢ , is closer to the hyperbola for Y = Yᵢ₋₁ + 1. To this end, it is sufficient, in place of the equation (5), to define${\text{F(R}}_{\text{i}} {\text{) = X}}_{\text{i-1}} {\text{(Y}}_{\text{i-1}} \text{+ 1) - K} {\text{F(S}}_{\text{i}} {\text{) = (X}}_{\text{i-1}} {\text{+ 1) (Y}}_{\text{i-1}} \text{+1) - K}$
and to select the point by the sign of another control variable eᵢ = F(Rᵢ) + F(Sᵢ), that is, to select Sᵢ if eᵢ < 0, and Rᵢ if eᵢ ≧ 0. The value of the control variable eᵢ can be incrementally calculated as in the equation (7) according to a recurrence formula${\text{e}}_{\text{o}} {\text{= 2((X}}_{\text{o}} {\text{+ 1)Y}}_{\text{o}} {\text{- K) + (X}}_{\text{o}} \text{+ 1),}$
when the point Sᵢ is selected (eᵢ ≧ 0),${\text{e}}_{\text{i+1}} {\text{= e}}_{\text{i}} {\text{+ 2(Y}}_{\text{i-1}} {\text{+ X}}_{\text{i-1}} \text{) + 7}$
and, when the point Rᵢ is selected (eᵢ < 0)${\text{e}}_{\text{i+1}} {\text{= e}}_{\text{i}} {\text{+ 2Y}}_{\text{i-1}} \text{+ 1.}$

If it is intended to draw an equilateral hyperbola on a raster display device, it is not necessary to take the trouble to compute the above generating equation for the case of octant O₂ separately from the equation (7). This is because the equilateral hyperbola is symmetrical about the line Y = X, and therefore, that part of the hyperbola in octant O₂ can be easily produced by diagonally rotating the range of lattice points obtained from the equation (7). However, in this case, the equilateral hyperbola is drawn in the area of octant O₁ in a direction in which the X coordinate value increases, and, on the other hand, is drawn in the area of octant O₂ in the direction in which the X coordinate value decreases. As to the invention, the direction generating the range of points must always be a one in which the X coordinate value increases throughout all areas because the hyperbola generator is constituted to correlate the pixel strings between a source image and a transformed image in the projective transformation processing of an image.

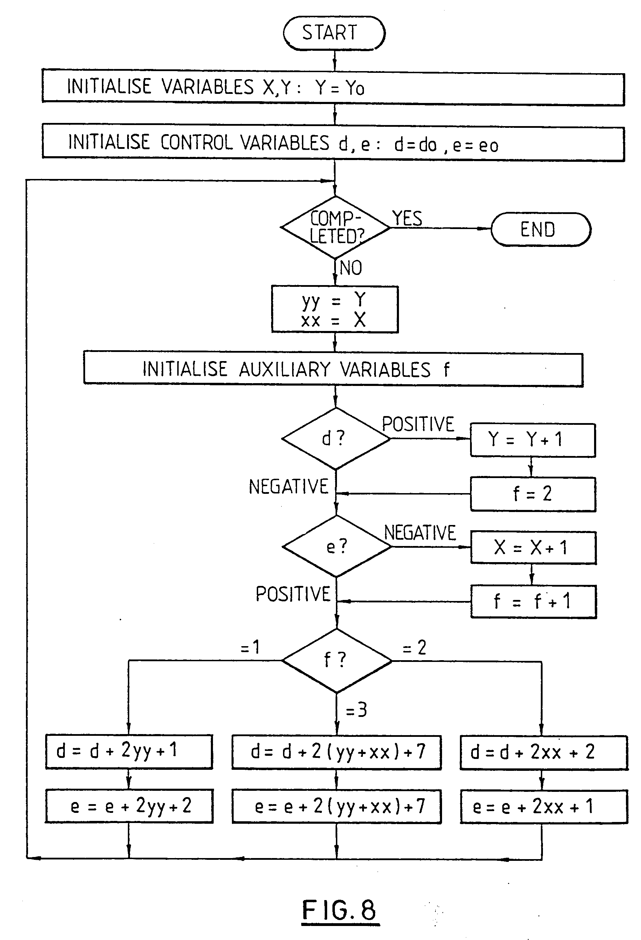

Then, to constitute a hyperbola generator that continuously generates equilateral hyperbolae while considering switching from the octant O₁ to O₂, it is sufficient to combine the equations (7) and (9) as shown in the flowchart of Figure 8 by introducing a new auxiliary variable f, adjusting its value by testing d and e, in turn, and finally testing the resultant f value to determine which d and e values are to be fed back into the next iteration. It is felt that further description of Figure 8 is not required since it is a straight implementation of the above-mentioned equations (7) and (8).

As described, according to the embodiment, the projective transformation can be easily attained by using hyperbolae that are generated by basing on a recurrence formula consisting only of additions, subtractions and sifting operations.

In the above arrangement, the value of one pixel is stored in one address for a grey scale or colour image. In case of a bi-level monochrome image, it is possible to store the values for multiple pixels, for example, 8 pixels of 1 bit each, in one byte address. In this latter case, it is preferable to read the source image information byte by byte, and to write it as the target image information, byte by byte. To this end, it is necessary to read the source image information along the scanning line, and similarly to write the target image information along the scanning line. This requirement can be satisfied by dividing the projective transformation into a product of two transformations that can be processed in the raster scanning direction. This is described in detail as "Two-path Technique" in E. Catmull and A. R. Smith, "3-D Transformation of Images in Scanline Order," SIGGRAPH Proceedings, July, 1980, pp. 279 - 285.

As described herein, it is possible to make the amount of calculation very small because lattice points near a hyperbola are sequentially and incrementally determined, and the projective transformation is performed by using a chain of the determined lattice points.

## Claims

1. Image processing apparatus for performing projective transformation from a source image to a target image along a plurality of consecutive lines parallel to one of the coordinate axes of the source image or the target image, the image processing apparatus comprising:
mapping means that determines a mapping between the coordinates of the pixels of the source image and coordinates of the pixels of the target image, and
means that determines the values of the pixels of the target image based on the mapping and the values of pixels of the source image,
characterized by
a hyperbola generator that sequentially examines rectangular lattice points near desired hyperbola sequentially along the hyperbola, and outputs a chain of the determined lattice points as an approximate curve of the hyperbola, wherein
said mapping means determines a mapping between the coordinates of the pixels of the source image and coordinates of the pixels of the target image based on the output of the hyperbola generator.

2. Apparatus as claimed in claim 1, wherein, when sequentially determining each lattice point constituting a part of the approximate curve, the hyperbola generator makes a plurality of adjacent lattice points in a plurality of directions according to the octant, to which a just determined lattice point belongs, a candidate for a part of the approximate curve following the just determined lattice point.

3. Apparatus as claimed in claim 2, wherein the hyperbola generator determines one of the candidate points to be a part of the approximate curve following the just determined lattice point based on the distance between each of the candidate lattice points and the hyperbola.

4. Apparatus as claimed in Claim 3, wherein the hyperbola generator performs the determination based on the distance using a recurrence formula.

## Patentansprüche

1. Ein Bildverarbeitungsgerät zur Ausführung von projektiven Transformationen von einem Ausgangsbild zu einem Zielbild entlang mehrerer aufeinanderfolgender Linien, die parallel zu einer der Koordinatenachsen des Ausgangsbildes oder des Zielbildes verlaufen, wobei das Bildverarbeitungsgerät umfaßt:
ein Abbildungsmittel, das eine Abbildung zwischen den Koordinaten der Pixel des Ausgangsbildes und den Koordinaten der Pixel des Zielbildes bestimmt, und
ein Mittel, das die Werte der Pixel des Zielbildes aufgrund der Abbildung und der Werte der Pixel des Ausgangsbildes bestimmt,
gekennzeichnet durch
einen Hyperbelgenerator, der sequentiell Punkte eines rechteckigen Gitters nahe einer gewünschten Hyperbel sequentiell entlang der Hyperbel überprüft und eine Kette der bestimmten Gitterpunkte als näherungsweise Kurve der Hyperbel ausgibt, wobei
das Abbildungsmittel aufgrund der Ausgabe des Hyperbelgenerators eine Abbildung zwischen den Koordinaten der Pixel des Ausgangsbildes und den Koordinaten der Pixel des Zielbildes bestimmt.

2. Ein Gerät nach Anspruch 1, wobei der Hyperbelgenerator bei der sequentiellen Bestimmung der einzelnen Gitterpunkte, die zu der näherungsweisen Kurve gehören, mehrere benachbarte Gitterpunkte in mehreren Richtungen entsprechend dem Oktanten, zu dem ein soeben bestimmter Gitterpunkt gehört, zu Kandidaten für einen Teil der näherungsweisen Kurve macht, der auf den soeben bestimmten Gitterpunkt folgt.

3. Ein Gerät nach Anspruch 2, wobei der Hyperbelgenerator aufgrund des Abstands zwischen den einzelnen Kandidaten-Gitterpunkten und der Hyperbel einen der Kandidatenpunkten zu einem Teil der näherungsweisen Kurve bestimmt, der auf den soeben bestimmten Gitterpunkt folgt.

4. Ein Gerät nach Anspruch 3, wobei der Hyperbelgenerator die Bestimmung aufgrund des Abstands mit Hilfe einer Rekursionsformel durchführt.

## Revendications

1. Appareil de traitement d'images pour effectuer une transformation de projection à partir d'une image source vers une image cible le long d'une pluralité de lignes consécutives parallèles à l'un des axes de coordonnées de l'image source ou de l'image cible, l'appareil de traitement d'images comprenant:
un moyen de mappage qui détermine un mappage entre les coordonnées des pixels de l'image source et les coordonnées des pixels de l'image cible, et
un moyen qui détermine les valeurs des pixels de l'image cible en fonction du mappage et des valeurs de pixels de l'image source,
caractérisé par
un générateur d'hyperboles qui examine de manière séquentielle les points d'un réseau rectangulaire proches des hyperboles souhaitées séquentiellement le long des hyperboles, et qui délivre une chaîne des points déterminés du réseau sous la forme d'une courbe approximative de l'hyperbole, dans lequel
ledit moyen de mappage détermine un mappage entre les coordonnées des pixels de l'image source et les coordonnées des pixels de l'image cible en fonction de la sortie du générateur d'hyperboles.

2. Appareil selon la revendication 1, dans lequel, lors de la détermination de manière séquentielle de chaque point du réseau constituant une partie de la courbe approximative, le générateur d'hyperboles crée une pluralité de points adjacents du réseau dans une pluralité de directions en fonction de l'octant, auquel appartient un point du réseau qui vient d'être déterminé, un candidat pour une partie de la courbe approximative suivant le point du réseau qui vient d'être déterminé.

3. Appareil selon la revendication 2, dans lequel le générateur d'hyperboles détermine l'un des points candidats pour être une partie de la courbe approximative suivant le point du réseau qui vient d'être déterminé en fonction de la distance entre chacun des points candidats du réseau et l'hyperbole.

4. Appareil selon la revendication 3, dans lequel le générateur d'hyperboles effectue la détermination en fonction de la distance en utilisant une formule de récurrence.
